# EUROPEAN PATENT SPECIFICATION

(11) **EP 3 801 861 B1**
(45) Date of publication and mention of the grant of the patent: **17.09.2025**
(21) Application number: 19729514.0
(22) Date of filing: 06.06.2019
(51) Int. Cl.: G01F 23/292, B01F 35/213, G01N 21/90

(54) **METHOD AND APPARATUS FOR MONITORING A DRIVE MECHANISM OF AN AUTOMATED INSPECTION SYSTEM FOR INDUCING MOTION TO A CONTAINER PARTIALLY FILLED WITH A LIQUID**
VERFAHREN UND VORRICHTUNG ZUR ÜBERWACHUNG EINES ANTRIEBSMECHANISMUS EINES AUTOMATISIERTEN INSPEKTIONSSYSTEMS ZUM INDUZIEREN VON BEWEGUNG EINES TEILWEISE MIT EINER FLÜSSIGKEIT GEFÜLLTEN BEHÄLTERS
PROCÉDÉ ET APPAREIL DE SURVEILLANCE D'UN MÉCANISME D'ENTRAÎNEMENT D'UN SYSTÈME D'INSPECTION AUTOMATISÉ POUR INDUIRE UN MOUVEMENT VERS UN RÉCIPIENT PARTIELLEMENT REMPLI D'UN LIQUIDE

(30) Priority: 07.06.2018 CH 7372018
(43) Date of publication of application: 14.04.2021
(73) Proprietor: Wilco AG, 5610 Wohlen (CH)
(72) Inventor: STIRNIMANN, Christian, 8105 Regensdorf (CH)
(74) Representative: Troesch Scheidegger Werner AG
(86) International application number: PCT/EP2019/064746
(87) International publication number: WO 2019/234138

(56) References cited:
- EP-A1- 3 062 113
- DE-A1- 102010 053 771
- DE-A1- 19 860 901
- GB-A- 1 524 042
- JP-A- 2003 098 107
- JP-A- 2005 017 004
- US-A1- 2005 099 625
- US-A1- 2005 248 765
- US-A1- 2007 115 467

## Description

### TECHNICAL FIELD

The present invention relates to automated inspection systems, and in particular pertains to a method as well as a corresponding apparatus for monitoring a drive mechanism of an automated inspection system for inducing motion to a container partially filled with a liquid.

### BACKGROUND OF THE INVENTION

Automated inspection machines are typically employing after filling containers with liquids in order to check the fill level, verify that the containers are correctly sealed, i.e. not leaking, and to examine whether the content of the container has been contaminated with impurities, which are often manifested as solid particles within the liquid. Furthermore, it is commonly checked whether the containers have defects such as scratches, cracks, deformations, etc. Common liquid containers are bottles and cans, e.g. for beverages, cosmetics or chemicals, as well as vials, ampoules, carpules and syringes for pharmaceutical/medical products. As part of the inspection process the containers are typically rotated, such that they can for instance be viewed from all sides. Frequently they are also rapidly rotated about their vertical axis in order to whirl up and thus make clearly visible unwanted solid particles present within the liquid. Moreover, it is often necessary to rotate containers in order to mix different liquid components contained therein. For this purpose the container to be handled, in particular to be tested, i.e. the unit/device under test, is for instance arranged in a rotation mechanism, e.g. placed on a rotary plate propelled by an electric motor such as a servo drive or stepper motor or clamped between a free-running pressing member and an actuated rotary disc. Alternatively, the containers are agitated in another way than rotating, for instance they may be vibrated, shaken, rattled or swayed, e.g. in order to stir up the liquid within the container.

For correct handling and inspection it must be ensured that the container is actually being rotated, e.g. that the plate/disc is being driven correctly, preferably at the correct speed/rate of rotation. Therefore, it is necessary to verify whether the drive mechanism which is intended to induce motion to the container is operating correctly, i.e. is causing the container to rotate, vibrate, sway from side to side, etc. This is typically achieved by monitoring the drive mechanism itself. For instance, to rotate a container the container is for instance clamped between a driven rotary plate and a pressing member rotatable with the container. Rotation monitoring can be performed by measuring the rotational speed of the rotary plate and comparing the measured rotational speed with a target rotational speed of the rotary plate. This makes it possible to effectively monitor the rotation of the container. However, the required monitoring device can be quite costly and needs extra space to be installed in the inspection machine.

US20070115467A1 pertains to an apparatus and method for ensuring rotation of a container during inspection. The proposed apparatus includes an optical inspection device having at least one light source for directing light energy onto the container as the container is rotated around an axis, and at least one light sensor for receiving light energy from the light source following interaction with the container. An image processor is coupled to the sensor for detecting rotation of the container as a function of fluctuations in the output from the sensor. Rotation of the container will cause some fluctuation in the output of the sensor due to interaction of the light energy with the container. The absence of any detected fluctuations in the sensor output is interpreted as an indication that the container is not rotating.

US20050248765A1 and US20050099625A1 both relate to procedures and devices utilized in the optical inspection of transparent containers for the presence of contaminating particulate matter. Small container fluid dynamics are employed to produce optimized inspection conditions. A container is rotated using a predetermined velocity motion profile so that the particles in a liquid will migrate to a location in the container so that the system can detect and accurately measure the size of particle.

Hence, for certain applications there exists a need for alternative solutions.

### SUMMARY OF THE INVENTION

It is an object of the present invention to provide alternative means for monitoring a drive mechanism of an automated inspection system for inducing motion to a container partially filled with a liquid, in particular an alternative motion monitoring method as well as an alternative motion monitoring apparatus. This object is achieved by the method according to claim 1 as well as by the apparatus according to claim 13. Specific embodiments of the method and apparatus according to the present invention are given in the dependent claims.

The present invention provides, as defined in claim 1, a method for monitoring a drive mechanism of an automated inspection system for inducing motion to a container partially filled with a liquid comprising the steps of:
- capturing measurement data, in particular image data, of a surface of the liquid in the container;
- extracting form data regarding a form of the surface of the liquid from the measurement data, in particular from the image data;
- detecting whether the container is in motion / in a state of motion, for instance being rotated, vibrated, shaken, rattled or swayed, based on the form data,
ensuring that the motion intended to be induced by the drive mechanism to the container and/or to the liquid inside the container is truly effective, and that the container and/or the liquid is really in motion.

Hence, the present invention is particularly well suited when automated vision inspection is already being employed for other purposes and the necessary hardware resources, such as an imaging system (either optical, acoustic or x-ray / high energy radiation based), is available and can additionally be used to perform motion detection/ monitoring, in particular by merely including a further software module capable of executing this task.

The present invention has the advantage over prior art solutions which monitor the drive mechanism itself, that motion of the liquid inside the container and therewith of the container containing the liquid is detected. In this way it is ensured that the motion intended to be induced by the drive mechanism to the container and/or to the liquid inside the container is truly effective, i.e. that the container and/or the liquid is really in motion.

In an embodiment of the method capturing measurement data, in particular image data, is performed by one of the following means:
- an optical sensor, more particularly a camera;
- an acoustic (sound) sensor, in particular an ultrasound sensor or a laser-based acoustic sensor;
- an x-ray detector.

In a further embodiment the method further comprises the following step when capturing measurement data, in particular image data, is performed by means of the optical sensor:
- applying bottom lighting and/or top lighting and/or back lighting and/or side lighting and/or front lighting, in particular bottom-angled lighting, top-angled lighting, rear-angled lighting or front-angled lighting, of the container.

In a further embodiment the method comprises the step of applying optical filtering, in particular polarisation or colour filtering.

In a further embodiment the method comprises the step of generating an acoustic/sound signal in a frequency range from 10 Hz to 20 kHz and/or an ultrasound signal in a frequency range from 20 kHz up to 1 MHz in air or up to 25 MHz in the liquid.

In a further embodiment of the method the step of capturing comprises:
- determining a region of interest comprising a section of the container within which at least part of the surface of the liquid is located.

In a further embodiment of the method the step of extracting form data comprises at least one of the following:
- determining a form of the surface;
- determining a structure of the surface;
- determining a contour of the surface;
- determining a curvature or slope of the surface;
- determining a height difference between a height of the surface at a wall of the container and a height of the surface within a central region of the container, in particular at a longitudinal axis of the container, more particularly at a vertical axis of the container;
- determining a height difference between a height of the surface within/at a central region of the container, in particular at a longitudinal axis of the container, more particularly at a vertical axis of the container, and a height of the surface within/at a peripheral region of the container, more particularly between the central region and a wall of the container;
- determining a presence of a vortex or swirl or turbulence within the liquid.

In a further embodiment of the method the step of detecting comprises at least one of the following:
- determining whether the form of the surface matches a predefined template within a predefined tolerance;
- determining whether a curvature radius exceeds a predefined value;
- determining whether the height difference exceeds a predefined value.

In a further embodiment of the method the step of capturing and/or the step of extracting comprises applying automated edge detection and/or feature recognition.

In a further embodiment of the method the step of extracting comprises pixel counting, in particular determining a number of pixels within the region of interest having an intensity within a certain predefined (intensity / grey level) interval or above a certain predefined (intensity / grey level) value and comparing the number with a predefined threshold value.

In a further embodiment of the method the step of determining comprises:
- determining a strength/speed of motion of the container based on the form data.

In a further embodiment of the method the steps of capturing and extracting are repeated multiple times, in particular at least once, and the step of determining comprises:
- determining a change in motion, in particular a change in a strength/speed of motion, of the container based on the form data determined at different times.

Additionally, a method for inspecting a liquid within a container, in particular for identifying (solid) particles present in the liquid, is suggested, comprising inducing motion to the container, for instance rotating, vibrating, shaking, rattling or swaying the container, and further comprising the proposed motion monitoring/detection method according to any one of the embodiments specified above or combinations of these embodiments.

Additionally, a method for mixing a substance and a liquid or for centrifuging a liquid substance in a container is suggested, comprising inducing motion to the container, for instance rotating, vibrating, shaking, rattling or swaying the container, and further comprising the proposed motion monitoring/detection method according to any one of the embodiments specified above or combinations of these embodiments.

Furthermore, the present invention is directed, as defined in claim 13, to an apparatus for monitoring a drive mechanism of an automated inspection system for inducing motion to a container partially filled with a liquid, the apparatus comprising:
- a measuring device, in particular an imaging device, in particular comprising an imaging sensor;
- a processor, in particular an image analysis processor, operationally connected to the measuring device, in particular the imaging device,
wherein
- the measuring device, in particular the imaging device, is adapted to capture measurement data, in particular image data, of a surface of the liquid in the container;
- the processor, in particular the image analysis processor, is adapted to extract form data regarding a form of the surface from the measurement data, in particular from the image data, to detect whether the container is in motion / in a state of motion, for instance being rotated, vibrated, shaken, rattled or swayed, based on the form data,
the apparatus thus being adapted to ensuring that the motion intended to be induced by the drive mechanism to the container and/or to the liquid inside the container is truly effective, and that the container and/or the liquid is really in motion.

Motion data regarding the state of motion of the container can then be output by the processor, in particular the image analysis processor.

In an embodiment the apparatus further comprises a motion indicator operationally connected to the processor, in particular the image analysis processor, wherein the motion indicator is adapted to indicate, e.g. display, information regarding the state of motion of the container based on the form data.

In a further embodiment of the apparatus the measuring device, in particular the imaging device, comprises at least one of the following:
- an optical sensor, more particularly a camera;
- a lighting unit adapted to provide bottom lighting and/or top lighting and/or back lighting and/or side lighting and/or front lighting, in particular bottom-angled lighting, top-angled lighting, rear-angled lighting or front-angled lighting, of the container;
- an acoustic (sound) source, in particular an ultrasound source;
- an acoustic (sound) sensor, in particular an ultrasound sensor, more particularly an ultrasound transducer, or a laser-based acoustic sensor;
- an x-ray source;
- an x-ray detector.

In a further embodiment the apparatus comprises a lens, in particular an optical wide-angle lens or a telephoto lens or a zoom lens or a macro lens. Alternatively, an electromagnetic lens, e.g. a magnet or electromagnet arrangement, may be employed, for instance to direct or focus the radiation emitted by an x-ray source.

In a further embodiment the apparatus comprises an optical filter, in particular a polarisation or colour filter.

In a further embodiment of the apparatus the acoustic/sound source is adapted to generate an acoustic/sound signal in a frequency range from 10 Hz to 20 kHz and/or an ultrasound signal in a frequency range from 20 kHz up to 1 MHz in air or up to 25 MHz in the liquid.

In a further embodiment the apparatus comprises a pixel counter, in particular adapted to determine a number of pixels within a region of interest having an intensity within a certain predefined (intensity / grey level) interval or above a certain predefined (intensity / grey level) value. The number can then be compared with a predefined threshold value by means of a comparator.

Additionally, an automated inspection system for inspecting a liquid within a container, in particular for identifying (solid) particles present in the liquid, is suggested, comprising a drive mechanism adapted to induce motion to the container, for instance to rotate, vibrate, shake, rattle or sway the container, and further comprising the proposed motion monitoring/detection apparatus according to any one of the embodiments specified above or combinations of these embodiments.

Additionally, an automated system for mixing a substance and a liquid or for centrifuging a liquid substance in a container is suggested, comprising a drive mechanism adapted to induce motion to the container, for instance to rotate, vibrate, shake, rattle or sway the container, and further comprising the proposed motion monitoring/detection apparatus according to any one of the embodiments specified above or combinations of these embodiments.

It is specifically pointed out that combinations of the embodiments described above can result in even further, more specific embodiments.

### BRIEF DESCRIPTION OF THE DRAWINGS

The present invention is further explained below by means of non-limiting specific embodiments and with reference to the accompanying drawings, which show the following:
- Fig. 1: a conceptual diagram of a first embodiment of the apparatus according to the present invention;
- Fig. 2: a conceptual diagram of a second embodiment of the apparatus according to the present invention;
- Fig. 3: a conceptual diagram of a third embodiment of the apparatus according to the present invention;
- Fig. 4: a cross-sectional view of a container under test with the region of interest encompassing the surface of the liquid contained in the container; and
- Fig. 5: a photo of a cross-sectional view of a container under test with the region of interest encompassing the surface of the liquid contained in the container.

### DETAILED DESCRIPTION OF THE INVENTION

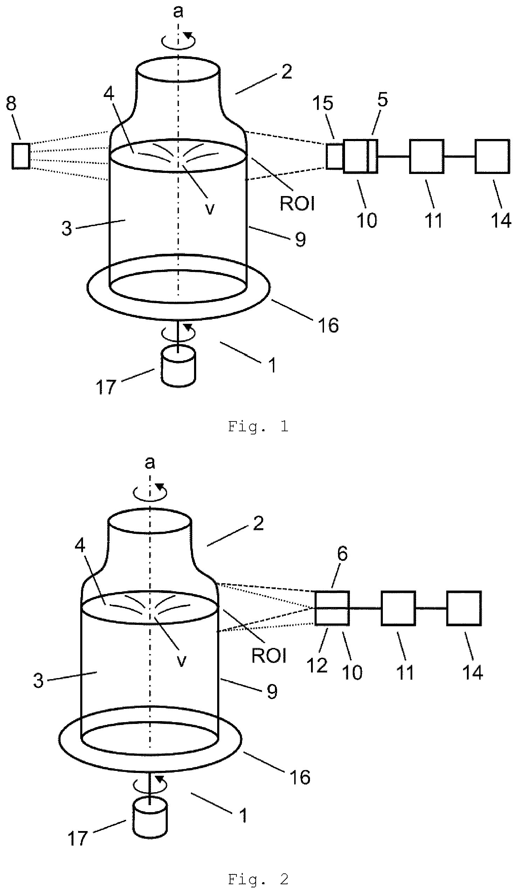

Fig. 1 depicts a conceptual diagram of a first embodiment of the apparatus according to the present invention. The container 2 to be tested is mounted on a rotation mechanism 1 such as a plate or disc 16 propelled by a motor 17 so that the container 2 is rotated about its longitudinal/ vertical axis a. If the container is rotating as expected the surface 4 of the liquid 3 within the container 2 will not be flat and horizontal, as is the case when the container 2 is not being rotated and standing still. Instead the liquid 3 will be forced away from the central axis a towards the wall 9 of the container 2 due to the centrifugal force caused by the rotation. Therefore, there will exist a height difference Δh between the surface 4 at the wall 9 and at the axis a. If a strong rotation is applied a vortex v or swirl with a funnel-like shape or more generally strong turbulence will be formed in the surface 4 of the liquid 3.

According to the method of the present invention image data of the surface 4 is captured in order to analyse the form of the surface 4 or to extract a specific feature of the surface 4, such as for instance its curvature, based upon which rotation of the container 2 is detected. In the embodiment shown in Fig. 1 a camera, i.e. an optical sensor 5, is employed as an imaging device 10 to capture the image data. The camera may comprise a lens 15, such as a wide-angle lens or a telephoto lens or a zoom lens or a macro lens, in order to optimally capture a sharp and detailed image of the surface 4 of the liquid 3. Moreover, especially to improve contrast, a lighting unit 8 adapted to provide bottom, top, back, side and/or front lighting of the container 2 may be used. The lighting may be directly coupled into the container 2, e.g. by integrating the lighting unit 8 into the plate or disc 16 onto which the container 2 is arranged/mounted. The material of which the container 2 is made, e.g. glass or plastic, as well as the liquid 3 within the container 2, can act as a waveguide for the light emitted by the lighting unit 8. The lighting unit 8 may emit visible, infrared (IR) or ultraviolet (UV) light. Moreover, an optical filter, such as a polarisation filter or a colour filter, may be arranged at the lighting unit 8 and/or the camera 5, e.g. be attached to the lens 15.

The captured image data is then processed by an image analysis processor 11, which for instance performs edge detection and/or feature recognition, and based on the extracted form data regarding the form of the surface 4 detects whether the container 2 is being rotated. The detected rotation data may then be provided to a rotation indicator 14, which for instance sends a signal to a control unit (not shown) connected to the motor 17.

Fig. 2 depicts a conceptual diagram of a second embodiment of the apparatus according to the present invention. In this embodiment an acoustic transducer, i.e. an acoustic/ sound source 12 together with an acoustic/sound sensor 6, is employed as the measuring device 10 to capture the measurement data. The sound may be in the hearable frequency range from 10 Hz to 20 kHz and/or an ultrasound signal in a frequency range from 20 kHz up to 1 MHz in air or up to 25 MHz in the liquid. The acoustic sensor 6 may be a laser-based acoustic sensor. The measurement data provided by the acoustic sensor 6 is processed by the processor 11. The measurement data may take on the form of image data (e.g. like a sonar or ultrasound image) that can be processed by an appropriate image analysis processor. This embodiment is especially suited for non-transparent containers, i.e. which do not allow light to pass through the wall 9 of the container 2 or through the liquid 2.

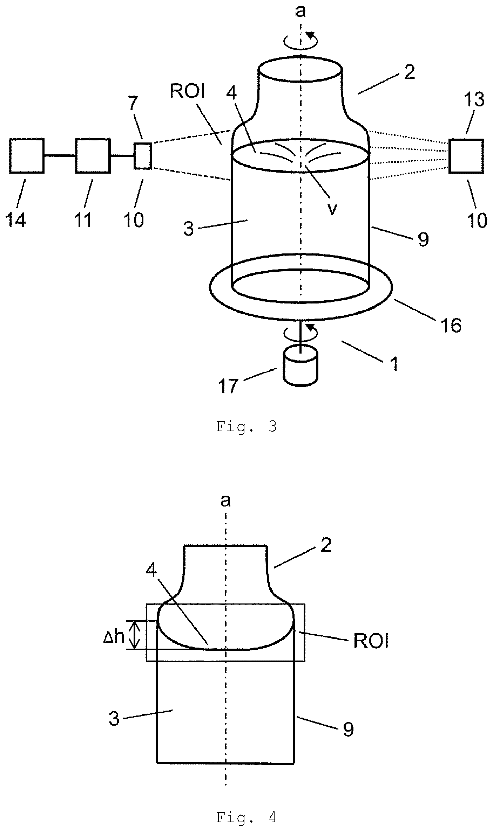

Fig. 3 depicts a conceptual diagram of a third embodiment of the apparatus according to the present invention. In this embodiment an x-ray source 13 (or other high energy radiation source) is employed together with an x-ray detector 7 (or other high energy radiation detector) as the imaging device 10 to capture the measurement data. This embodiment too is especially suited for optically non-transparent containers and/or liquids.

Fig. 4 illustrates a cross-sectional view of a container 2 under test with the region of interest ROI encompassing the surface 4 of the liquid 3 contained in the container 2. Initially, the region of interest ROI may not be known and either needs to be adjusted manually by an operator of the apparatus, or automatically, e.g. with the help of the image analysis processor 11. In Fig. 4 it is clearly visible how the liquid 3 is forced against the wall 9 of the container 2 due to rotation of the container 2, such that the surface 4 of the liquid 3 has a curved form with an increased height of Δh at the wall 9. If the container 2 were swayed side to side there would also be a noticeable height difference Δh of the surface 4 of the liquid 3 between the two opposing walls 9 (as seen in a cross-sectional view of the container 2).

In the examples described above, a rotational motion is induced to the container 2. However, the container 2 can also be arranged/mounted on a plate/disc 16 which agitates the container 2 in some other way, for instance vibrates, shakes, rattles or sways the container 2, e.g. induces a translatory motion, for certain applications.

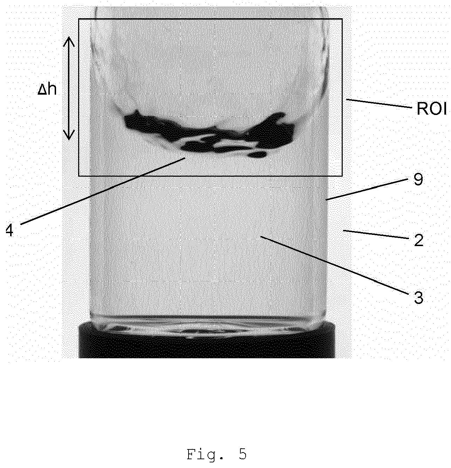

Fig. 5 shows a photo of a cross-sectional view of a container 2 under test with the region of interest ROI marked as a rectangle. As can be seen the surface 4 of the liquid 3 appears as a dark area in the photo, due to the reflections of the light from the lighting unit 8 (located below the container 2 in this case) on the agitated and therefor turbulent surface 4 of the liquid 3. The region of interest ROI may for instance be partitioned into a plurality of fields by means of a grid and the number of dark (e.g. black) pixels within each field of the grid may be determined using a pixel counter. Subsequently, the position of those fields containing a number of dark pixels exceeding a predefined threshold may be determined, based upon which information regarding the shape or form of the surface 4 is established. From this information it is possible to detect whether the container 2 is being rotated, vibrated, shaken, rattled or swayed (e.g. a specific state or kind of motion). It is even possible to determine the strength of the container's motion, e.g. how fast it is rotating. Additionally, by capturing a sequence of images it is possible to determine whether the strength of motion, e.g. the rate of rotation is changing, i.e. increasing, decreasing, or is steady.

In an especially simple implementation of the present invention employing a pixel counter the number of pixels within the entire region of interest ROI having an intensity above a certain predefined grey (e.g. darkness) level value are determined with the pixel counter (e.g. counts "dark" pixels). If this number exceeds a predefined threshold the liquid 3 and the container 2 are considered to be in motion. The higher the number determined with the pixel counter the stronger the motion of the liquid 3 and of the container 2. Therefore, the strength of the motion can also be determined from the number of dark pixels determined with the pixel counter. An increase of this number over time would therefore indicate an increase in motion of the liquid 3 and therewith of the container 2, and a decrease of this number over time would indicate a decrease in motion of the liquid 3 and therewith of the container 2.

### LIST OF REFERENCE SYMBOLS

- 1: drive mechanism
- 2: container
- 3: liquid
- 4: surface of the liquid
- 5: optical sensor, camera
- 6: acoustic/sound sensor
- 7: x-ray detector
- 8: lighting unit with a light source
- 9: container wall
- 10: measurement/imaging device
- 11: (image analysis) processor
- 12: acoustic/sound source
- 13: x-ray source
- 14: motion/rotation indicator
- 15: lens
- 16: rotatable/movable plate/disc
- 17: motor/drive
- Δh: height difference
- a: longitudinal/vertical axis of the container
- ROI: region of interest
- v: vortex/swirl

## Claims

1. A method for monitoring a drive mechanism (1) of an automated inspection system for inducing motion to a container (2) partially filled with a liquid (3) comprising the steps of:
- capturing measurement data, in particular image data, of a surface (4) of the liquid (3) in the container (2);
- extracting form data regarding a form of the surface (4) of the liquid (3) from the measurement data, in particular from the image data;
- detecting whether the container (2) is in motion based on the form data,
ensuring that the motion intended to be induced by the drive mechanism (1) to the container (2) and/or to the liquid (3) inside the container (2) is truly effective, and that the container (2) and/or the liquid (3) is really in motion.

2. The method of claim 1, wherein capturing measurement data, in particular image data, is performed by one of the following means:
- an optical sensor (5), more particularly a camera;
- an acoustic sensor (6), in particular an ultrasound sensor or a laser-based acoustic sensor;
- an x-ray detector (7).

3. The method of claim 2, further comprising the following step when capturing measurement data, in particular image data, is performed by means of the optical sensor (5):
- applying bottom lighting and/or top lighting and/or back lighting and/or side lighting and/or front lighting, in particular bottom-angled lighting, top-angled lighting, rear-angled lighting or front-angled lighting, of the container (2).

4. The method of claim 2 or 3, further comprising the step of applying optical filtering, in particular polarisation or colour filtering.

5. The method of claim 2, further comprising the step of generating an acoustic signal in a frequency range from 10 Hz to 20 kHz and/or an ultrasound signal in a frequency range from 20 kHz up to 1 MHz in air or up to 25 MHz in the liquid (3).

6. The method of any one of claims 1 to 5, wherein the step of capturing comprises:
- determining a region of interest (ROI) comprising a section of the container (2) within which at least part of the surface (4) of the liquid (3) is located.

7. The method of any one of claims 1 to 6, wherein the step of extracting form data comprises at least one of the following:
- determining a form of the surface (4);
- determining a structure of the surface (4);
- determining a contour of the surface (4);
- determining a curvature or slope of the surface (4);
- determining a height difference (Δh) between a height of the surface (4) at a wall (9) of the container (2) and a height of the surface (4) within a central region of the container (2), in particular at a longitudinal axis (a) of the container (2), more particularly at a vertical axis (a) of the container (2);
- determining a presence of a vortex (v) or turbulence within the liquid (3).

8. The method of claim 7, wherein the step of detecting comprises at least one of the following:
- determining whether the form of the surface (4) matches a predefined template within a predefined tolerance;
- determining whether a curvature radius exceeds a predefined value;
- determining whether the height difference (Δh) exceeds a predefined value.

9. The method of any one of claims 1 to 8, wherein the step of capturing and/or the step of extracting comprises applying automated edge detection and/or feature recognition.

10. The method of any one of claims 6 to 9, wherein the step of extracting comprises pixel counting, in particular determining a number of pixels within the region of interest (ROI) having an intensity within a predefined intensity interval or above a predefined intensity value and comparing the number with a predefined threshold value.

11. The method of any one of claims 1 to 10, wherein the step of determining comprises:
- determining a strength of motion of the container (2) based on the form data.

12. The method of any one of claims 1 to 11, wherein the steps of capturing and extracting are repeated multiple times, in particular at least once, and the step of determining comprises:
- determining a change in motion, in particular a change in a strength of motion, of the container (2) based on the form data determined at different times.

13. An apparatus for monitoring a drive mechanism (1) of an automated inspection system for inducing motion to a container (2) partially filled with a liquid (3), the apparatus comprising:
- a measuring device (10), in particular an imaging device, in particular comprising an imaging sensor;
- a processor (11), in particular an image analysis processor, operationally connected to the measuring device (10), in particular the imaging device,
wherein
- the measuring device (10), in particular the imaging device, is adapted to capture measurement data, in particular image data, of a surface (4) of the liquid (3) in the container (2);
- the processor (11), in particular the image analysis processor, is adapted to extract form data regarding a form of the surface (4) from the measurement data, in particular from the image data, to detect whether the container (2) is in motion based on the form data,
the apparatus thus being adapted to ensuring that the motion intended to be induced by the drive mechanism (1) to the container (2) and/or to the liquid (3) inside the container (2) is truly effective, and that the container (2) and/or the liquid (3) is really in motion.

14. The apparatus of claim 13, further comprising means for performing the method according to any one of the claims 2 to 12.

15. The apparatus of claim 13 or 14, further comprising a pixel counter, in particular adapted to determine a number of pixels within a region of interest (ROI) having an intensity within a predefined intensity interval or above a predefined intensity value, and in particular further comprising a comparator for comparing the number with a predefined threshold value.

## Patentansprüche

1. Ein Verfahren zur Überwachung eines Antriebsmechanismus (1) eines automatisierten Inspektionssystems zum Induzieren einer Bewegung auf ein teilweise mit einer Flüssigkeit (3) gefüllten Behälter (2), umfassend die Schritte:
- Erfassen von Messdaten, insbesondere Bilddaten, einer Oberfläche (4) der Flüssigkeit (3) in dem Behälter (2);
- Extrahieren von Formdaten über eine Form der Oberfläche (4) der Flüssigkeit (3) aus den Messdaten, insbesondere aus den Bilddaten;
- Erkennen anhand der Formdaten, ob sich der Behälter (2) in Bewegung befindet,
um sicherzustellen, dass die Bewegung, die durch den Antriebsmechanismus (1) auf den Behälter (2) und/oder auf die Flüssigkeit (3) im Inneren des Behälters (2) ausgelöst werden soll, wirklich wirksam ist, und dass der Behälter (2) und/oder die Flüssigkeit (3) wirklich in Bewegung ist.

2. Das Verfahren nach Anspruch 1, wobei das Erfassen von Messdaten, insbesondere Bilddaten, durch eines der folgenden Mittel durchgeführt wird:
- ein optischer Sensor (5), insbesondere eine Kamera;
- ein akustischer Sensor (6), insbesondere ein Ultraschallsensor oder ein laser-basierter akustischer Sensor;
- ein Röntgendetektor (7).

3. Das Verfahren nach Anspruch 2, ferner umfassend den folgenden Schritt, wenn das Erfassen von Messdaten, insbesondere Bilddaten, mittels des optischen Sensors (5) durchgeführt wird:
- Anwenden einer Bodenbeleuchtung und/oder einer Ober- und/oder einer Rückbeleuchtung und/oder einer Seitenbeleuchtung und/oder einer Frontbeleuchtung, insbesondere einer Bodenwinkelbeleuchtung, einer Oberwinkelbeleuchtung, einer Rückwinkelbeleuchtung oder einer Frontwinkelbeleuchtung des Behälters (2).

4. Das Verfahren nach Anspruch 2 oder 3, ferner umfassend den Schritt des Anwendens einer optischen Filterung, insbesondere einer Polarisations- oder Farbfilterung.

5. Das Verfahren nach Anspruch 2, ferner umfassend den Schritt des Erzeugens eines akustischen Signals in einem Frequenzbereich von 10 Hz bis 20 kHz und/oder eines Ultraschallsignals in einem Frequenzbereich von 20 kHz bis 1 MHz in Luft oder bis zu 25 MHz in der Flüssigkeit (3).

6. Das Verfahren nach einem der Ansprüche 1 bis 5, wobei der Schritt des Erfassens umfasst:
- Bestimmen eines interessierenden Bereichs (ROI), der einen Abschnitt des Behälters (2) umfasst, in dem sich zumindest ein Teil der Oberfläche (4) der Flüssigkeit (3) befindet.

7. Das Verfahren nach einem der Ansprüche 1 bis 6, wobei der Schritt des Extrahierens von Formdaten mindestens eines der folgenden umfasst:
- Bestimmen einer Form der Oberfläche (4);
- Bestimmen einer Struktur der Oberfläche (4);
- Bestimmen einer Kontur der Oberfläche (4);
- Bestimmen einer Krümmung oder Neigung der Oberfläche (4);
- Bestimmen eines Höhenunterschieds (Δh) zwischen einer Höhe der Oberfläche (4) an einer Wand (9) des Behälters (2) und einer Höhe der Oberfläche (4) innerhalb eines zentralen Bereichs des Behälters (2), insbesondere an einer Längsachse (a) des Behälters (2), insbesondere an einer vertikalen Achse (a) des Behälters (2);
- Feststellen eines Vorhandenseins eines Wirbels (v) oder einer Turbulenz in der Flüssigkeit (3).

8. Das Verfahren nach Anspruch 7, wobei der Schritt des Erkennens mindestens eines der folgenden umfasst:
- Bestimmen, ob die Form der Oberfläche (4) mit einer vordefinierten Schablone innerhalb einer vordefinierten Toleranz übereinstimmt;
- Bestimmen, ob ein Krümmungsradius einen vordefinierten Wert überschreitet;
- Bestimmen, ob der Höhenunterschied (Δh) einen vordefinierten Wert überschreitet.

9. Das Verfahren nach einem der Ansprüche 1 bis 8, wobei der Schritt des Erfassens und/oder der Schritt des Extrahierens das Anwenden einer automatisierten Kantenerkennung und/oder Merkmalserkennung umfasst.

10. Das Verfahren nach einem der Ansprüche 6 bis 9, wobei der Schritt des Extrahierens das Zählen von Pixeln umfasst, insbesondere das Bestimmen einer Anzahl von Pixeln innerhalb des interessierenden Bereichs (ROI) mit einer Intensität innerhalb eines vordefinierten Intensitätsintervalls oder oberhalb eines vordefinierten Intensitätswerts und das Vergleichen der Anzahl mit einem vordefinierten Schwellenwert.

11. Das Verfahren nach einem der Ansprüche 1 bis 10, wobei der Schritt des Bestimmens umfasst:
- Bestimmen einer Bewegungsstärke des Behälters (2) basierend auf den Formdaten.

12. Das Verfahren nach einem der Ansprüche 1 bis 11, wobei die Schritte des Erfassens und Extrahierens mehrmals, insbesondere mindestens einmal, wiederholt werden, und der Schritt des Bestimmens umfasst:
- Bestimmen einer Änderung der Bewegung, insbesondere einer Änderung der Bewegungsstärke, des Behälters (2) basierend auf den zu verschiedenen Zeitpunkten ermittelten Formdaten.

13. Eine Vorrichtung zur Überwachung eines Antriebsmechanismus (1) eines automatisierten Inspektionssystems zum Induzieren einer Bewegung auf ein teilweise mit einer Flüssigkeit (3) gefüllten Behälter (2), wobei die Vorrichtung umfasst:
- ein Messgerät (10), insbesondere eine bildgebende Vorrichtung, insbesondere mit einem bildgebenden Sensor;
- einen Prozessor (11), insbesondere einen Bildanalyseprozessor, der wirkverbunden ist mit der Messvorrichtung (10), insbesondere der bildgebenden Vorrichtung,
wobei
- das Messgerät (10), insbesondere die bildgebende Vorrichtung, dazu ausgebildet ist, Messdaten, insbesondere Bilddaten, einer Oberfläche (4) der Flüssigkeit (3) in dem Behälter (2) zu erfassen;
- der Prozessor (11), insbesondere der Bildanalyseprozessor, dazu geeignet ist, aus den Messdaten, insbesondere aus den Bilddaten, Formdaten bezüglich einer Form der Oberfläche (4) zu extrahieren, um anhand der Formdaten zu erkennen, ob sich der Behälter (2) in Bewegung befindet,
womit die Vorrichtung so beschaffen ist, dass sie sicherstellt, dass die Bewegung, die durch den Antriebsmechanismus (1) auf den Behälter (2) und/oder auf die Flüssigkeit (3) im Inneren des Behälters (2) hervorgerufen werden soll, wirklich wirksam ist und dass der Behälter (2) und/oder die Flüssigkeit (3) tatsächlich in Bewegung ist.

14. Die Vorrichtung nach Anspruch 13, ferner umfassend Mittel zum Durchführen des Verfahrens nach einem der Ansprüche 2 bis 12.

15. Die Vorrichtung nach Anspruch 13 oder 14, ferner umfassend einen Pixelzähler, insbesondere ausgeführt zum Bestimmen einer Anzahl von Pixeln innerhalb eines interessierenden Bereichs (ROI) mit einer Intensität innerhalb eines vordefinierten Intensitätsintervalls oder oberhalb eines vordefinierten Intensitätswerts, und insbesondere ferner umfassend einem Komparator zum Vergleichen der Anzahl mit einem vordefinierten Schwellenwert.

## Revendications

1. Procédé de surveillance d'un mécanisme d'entraînement (1) d'un système d'inspection automatisé destiné à provoquer un mouvement d'un récipient (2) partiellement rempli d'un liquide (3), comprenant les étapes consistant à :
- capturer des données de mesure, en particulier des données d'image, d'une surface (4) du liquide (3) se trouvant dans le récipient (2) ;
- extraire des données de mesure, en particulier des données d'image, des données de forme portant sur une forme de la surface (4) du liquide (3) ;
- détecter si le récipient (2) se trouve en mouvement en s'appuyant sur les données de forme,
garantissant que le mouvement devant être communiqué par le mécanisme d'entraînement (1) au récipient (2) et/ou au liquide (3) se trouvant à l'intérieur du récipient (2) se produit réellement, et que le récipient (2) et/ou le liquide (3) sont réellement en mouvement.

2. Procédé de la revendication 1, dans lequel la capture de données de mesure, en particulier de données d'image, est réalisée par l'un des moyens suivants :
- un capteur optique (5), plus particulièrement une caméra ;
- un capteur acoustique (6), en particulier un capteur ultrasons ou un capteur acoustique à laser ;
- un capteur radiographique (7).

3. Procédé de la revendication 2, comprenant en outre l'étape suivante lorsque la capture de données de mesure, en particulier de données d'image, est réalisée au moyen du capteur optique (5) :
- application sur le récipient (2) d'un éclairage par le dessous et/ou d'un éclairage par le dessus et/ou d'un éclairage arrière et/ou d'un éclairage latéral et/ou d'un éclairage avant, en particulier d'un éclairage par le dessous selon un certain angle, d'un éclairage par le dessus selon un certain angle, d'un éclairage par l'arrière selon un certain angle ou d'un éclairage par l'avant selon un certain angle.

4. Procédé de la revendication 2 ou 3, comprenant en outre l'étape consistant à appliquer un filtrage optique, en particulier un filtrage de polarisation ou un filtrage de couleur.

5. Procédé de la revendication 2, comprenant en outre l'étape consistant à générer un signal acoustique dans une plage de fréquences de 10 Hz à 20 kHz et/ou un signal ultrasonore dans une plage de fréquences de 20 kHz jusqu'à 1 MHz dans l'air ou jusqu'à 25 MHz dans le liquide (3).

6. Procédé de l'une quelconque des revendications 1 à 5, dans lequel l'étape de capture comprend l'étape consistant à :
- déterminer une région d'intérêt (ROI) comprenant une section du récipient (2) au sein de laquelle se trouve au moins une partie de la surface (4) du liquide (3).

7. Procédé de l'une quelconque des revendications 1 à 6, dans lequel l'étape d'extraction des données de forme comprend au moins l'une des opérations suivantes consistant à :
- déterminer une forme de la surface (4) ;
- déterminer une structure de la surface (4) ;
- déterminer un contour de la surface (4) ;
- déterminer une courbure ou une pente de la surface (4) ;
- déterminer une différence de hauteur (Δh) entre une hauteur de la surface (4) au niveau d'une paroi (9) du récipient (2) et une hauteur de la surface (4) au sein d'une région centrale du récipient (2), en particulier au niveau d'un axe longitudinal (a) du récipient (2), plus particulièrement au niveau d'un axe vertical (a) du récipient (2) ;
- déterminer la présence d'un vortex (v) ou d'une turbulence au sein du liquide (3).

8. Procédé de la revendication 7, dans lequel l'étape de détection comprend au moins l'une des opérations suivantes consistant à :
- déterminer si la forme de la surface (4) correspond à un modèle prédéfini au sein d'une tolérance prédéfinie ;
- déterminer si un rayon de courbure dépasse une valeur prédéfinie ;
- déterminer si la différence de hauteur (Δh) dépasse une valeur prédéfinie.

9. Procédé de l'une quelconque des revendications 1 à 8, dans lequel l'étape de capture et/ou l'étape d'extraction comprend l'application d'une détection de bord automatisée et/ou d'une reconnaissance de caractéristique.

10. Procédé de l'une quelconque des revendications 6 à 9, dans lequel l'étape d'extraction comprend le comptage de pixels, en particulier la détermination, au sein de la région d'intérêt (ROI), d'un nombre de pixels présentant une intensité comprise dans un intervalle d'intensités prédéfini ou au-dessus d'une valeur d'intensité prédéfinie, et la comparaison du nombre avec une valeur de seuil prédéfinie.

11. Procédé de l'une quelconque des revendications 1 à 10, dans lequel l'étape de détermination comprend l'étape consistant à :
- déterminer une force de mouvement du récipient (2) en s'appuyant sur les données de forme.

12. Procédé de l'une quelconque des revendications 1 à 11, dans lequel les étapes de capture et d'extraction sont répétées plusieurs fois, en particulier au moins une fois, et l'étape de détermination comprend l'étape consistant à :
- déterminer une modification dans le mouvement, en particulier une modification d'une force de mouvement, du récipient (2) en s'appuyant sur les données de forme déterminées à différents moments.

13. Appareil de surveillance d'un mécanisme d'entraînement (1) d'un système d'inspection automatisé destiné à provoquer un mouvement d'un récipient (2) partiellement rempli d'un liquide (3), l'appareil comprenant :
- un dispositif de mesure (10), en particulier un dispositif d'imagerie, en particulier comprenant un capteur d'images ;
- un processeur (11), en particulier un processeur d'analyse d'images, connecté de manière fonctionnelle au dispositif de mesure (10), en particulier au dispositif d'imagerie,
dans lequel
- le dispositif de mesure (10), en particulier le dispositif d'imagerie, est adapté pour capturer des données de mesure, en particulier des données d'image, d'une surface (4) du liquide (3) se trouvant dans le récipient (2) ;
- le processeur (11), en particulier le processeur d'analyse d'image, est adapté pour extraire des données de mesure, en particulier des données d'image, des données de forme portant sur une forme de la surface (4) afin de détecter, en s'appuyant sur les données de forme, si le récipient (2) est en mouvement,
l'appareil étant ainsi adapté pour garantir que le mouvement devant être communiqué par le mécanisme d'entraînement (1) au récipient (2) et/ou au liquide (3) se trouvant à l'intérieur du récipient (2) se produit réellement, et que le récipient (2) et/ou le liquide (3) sont réellement en mouvement.

14. Appareil de la revendication 13, comprenant en outre des moyens pour exécuter le procédé selon l'une quelconque des revendications 2 à 12.

15. Appareil de la revendication 13 ou 14, comprenant en outre un compteur de pixels, en particulier adapté pour déterminer, au sein d'une région d'intérêt (ROI), un nombre de pixels présentant une intensité comprise dans un intervalle d'intensités prédéfini ou au-dessus d'une valeur d'intensité prédéfinie, et comprenant en outre en particulier un comparateur permettant de comparer le nombre avec une valeur de seuil prédéfinie.
